# FASCICULE DE BREVET EUROPEEN

(11) **EP 0 651 197 B1**
(45) Date de publication et mention de la délivrance du brevet: **20.02.2002**
(21) Numéro de dépôt: 94402466.0
(22) Date de dépôt: 02.11.1994
(51) Int. Cl.: F16L 25/00, F16L 13/14, F16J 15/02

(54) **Procédé d'assemblage d'un joint d'étanchéité et d'un tube et assemblage d'un tel joint et d'un tube**
Verfahren zum hermetischen Zusammenbauen einer Dichtung und eines Rohres und Zusammenbau einer solchen Dichtung mit einem Rohr
Method of hermetically assembling a seal and a pipe and assembly of such a seal and a pipe

(30) Priorité: 03.11.1993 FR 9313047
(43) Date de publication de la demande: 03.05.1995
(73) Titulaire: LE JOINT FRANCAIS, Société en Nom Collectif, F-75008 Paris (FR)
(72) Inventeur: Voirol, Bernard, F-95240 Cormeilles en Parisis (FR); Cochin, Didier, F-92140 Clamart (FR); Travers, Thierry, F-53200 Chateau-Gontier (FR)
(74) Mandataire: Orès, Bernard

(56) Documents cités:
- DE-C- 4 200 805
- GB-A- 1 350 593
- GB-A- 2 076 479
- NL-A- 7 500 337

## Description

La présente invention se rapporte à un procédé de scellement hermétique mettant en oeuvre un joint d'étanchéité et un tube et à un assemblage fixe d'un tel joint et d'un tube.

L'étanchéité à la jonction de deux pièces est typiquement assurée par l'interposition et la mise en compression d'un joint. Cette étanchéité peut être compromise par la présence à ce niveau de particules solides, notamment des poussières ou des grains d'une poudre qui auraient dû être confinés dans un compartiment étanche, ainsi que des films ou gouttes de produits liquides ou visqueux comme par exemple de l'eau, de l'huile ou de la graisse.

Le document DE-C-42 00 805 décrit un joint d'étanchéité réalisé en une matière plastique, qui comprend une pluralité de racleurs de nettoyage en forme de dents de scie et qui est monté à l'extrémité d'un tube de guidage d'une antenne télescopique pour un véhicule automobile.

Un but de l'invention est de concevoir un procédé pour assembler fixement un joint du type précité et un tube, et assurer l'étanchéité y compris au niveau de parois polluées du tube, notamment recouvertes par des particules solides, des gouttes ou des films d'éléments liquides ou visqueux.

A cet effet, l'invention propose un procédé pour assembler fixement un joint d'étanchéité en matière plastique et un tube, ledit joint présentant des première et seconde extrémités, et un racleur annulaire disposé sur sa face externe à une certaine distance de la première extrémité, ledit procédé étant caractérisé en ce qu'il consiste à engager dans le tube de diamètre intérieur d4, le joint de diamètre extérieur d3 sensiblement égal ou inférieur à d4 par sa seconde extrémité pour que ledit racleur de diamètre externe d6 supérieur à d4 assure par écrasement le nettoyage, sur une longueur correspondant sensiblement à la distance séparant le racleur de ladite première extrémité du joint, de la surface du tube destinée à être en contact fixe avec le joint.

L'invention propose également un procédé pour assembler fixement un joint d'étanchéité en matière élastique et un tube, ledit joint présentant des première et seconde extrémités, et un racleur annulaire disposé sur sa face interne à une certaine distance de la première extrémité, ledit procédé étant caractérisé en ce qu'il consiste à engager autour du tube de diamètre externe d1 le joint de diamètre interne d2 sensiblement égal ou supérieur à d1 par sa seconde extrémité pour que ledit racleur de diamètre d5 intérieur inférieur audit diamètre d1 assure par écrasement le nettoyage, sur une longueur correspondant sensiblement à la distance séparant le racleur de la seconde extrémité du joint, de la surface du tube destinée à être en contact fixe avec le joint.

Enfin, l'invention propose aussi un assemblage fixe d'un tel joint et d'un ou deux tubes tels que défini par les revendications 5-10.

L'invention sera mieux comprise au moyen de la description ci-après et des figures annexées données comme des exemples non limitatifs et sur lesquelles :
- la figure 1a est une vue en perspective de deux tubes avant leur assemblage ainsi que d'un joint de type connu ;
- la figure 1b est une vue en coupe longitudinale des tubes de la figure 1a dans une condition assemblée ;
- la figure 2 est une vue en coupe longitudinale d'un premier exemple de réalisation d'un joint selon la présente invention ;
- la figure 3 est une vue en coupe longitudinale d'un deuxième exemple de réalisation d'un joint selon la présente invention ;
- la figure 4 est une vue en coupe longitudinale d'un troisième exemple de réalisation d'un joint selon la présente invention ;
- la figure 5 est une vue en coupe longitudinale d'un quatrième exemple de réalisation d'un joint selon la présente invention ;
- la figure 6 est une vue en coupe longitudinale d'un cinquième exemple de réalisation d'un joint selon la présente invention ;
- la figure 7 est une vue en coupe longitudinale d'un sixième exemple de réalisation d'un joint selon la présente invention ;
- la figure 8 est une vue en coupe longitudinale d'un septième exemple de réalisation d'un joint selon la présente invention ;
- la figure 9 est une vue en coupe longitudinale d'un huitième exemple de réalisation d'un joint selon la présente invention ;
- la figure 10 est une vue en coupe longitudinale d'un neuvième exemple de réalisation d'un joint selon la présente invention ;
- la figure 11 est une vue en perspective de deux tubes avant leur assemblage ainsi que du joint de la figure 8 ;
- la figure 12 est une vue en perspective avec arrachement partiel d'un exemple de réalisation d'un moule susceptible d'être mis en oeuvre pour la fabrication d'un joint selon la présente invention.

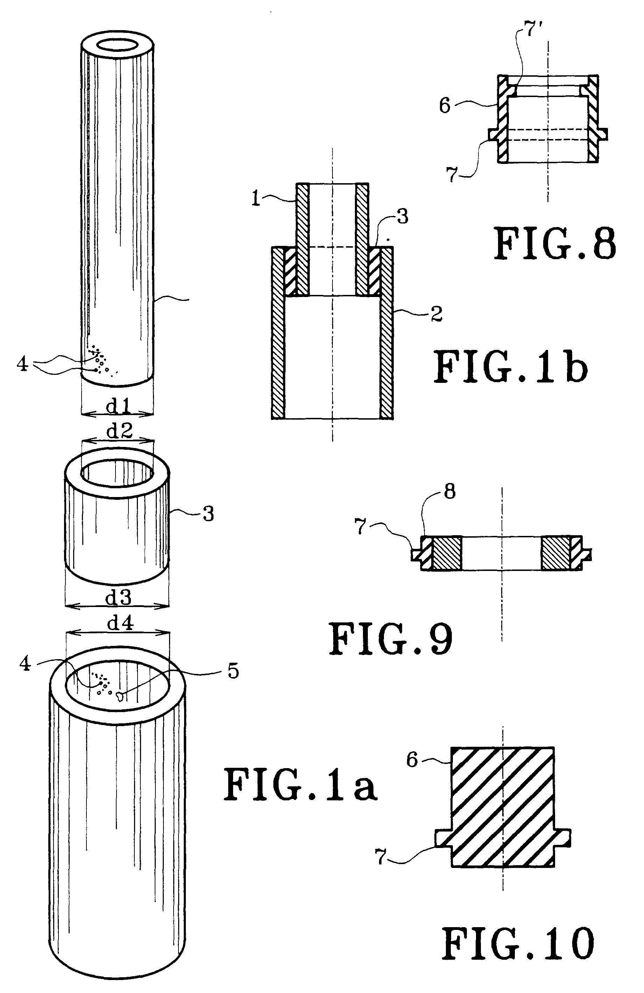

Sur les figures 1 à 12, l'on a utilisé les mêmes références pour désigner les mêmes éléments.

Sur la figure 1a, l'on peut voir un premier tube ou tige 1 de diamètre externe d1 que l'on désire assembler de manière étanche avec un deuxième tube de diamètre interne d4 supérieur à d1. L'on peut, de manière connue, utiliser un joint cylindrique 3 obtenu par tronçonnage d'un tube, par exemple en caoutchouc ayant un diamètre interne d2 sensiblement égal à d1 et un diamètre externe d3 sensiblement égal à d4.

Comme on peut le voir sur la figure 1b, le joint 3 assure l'étanchéité au niveau de la jonction des tubes 1 et 2. Malheureusement, la surface externe du tube 1 ou la surface interne du tube 2 peut être maculée ou polluée par des poussières solides 4 et/ou des taches liquides ou visqueuses 5 qui se présentent, par exemple sous forme de films ou de gouttes. La présence de cette pollution, au moment de l'assemblage des tubes 1 et 2 avec interposition du joint 3, risque de compromettre l'étanchéité au niveau de la jonction.

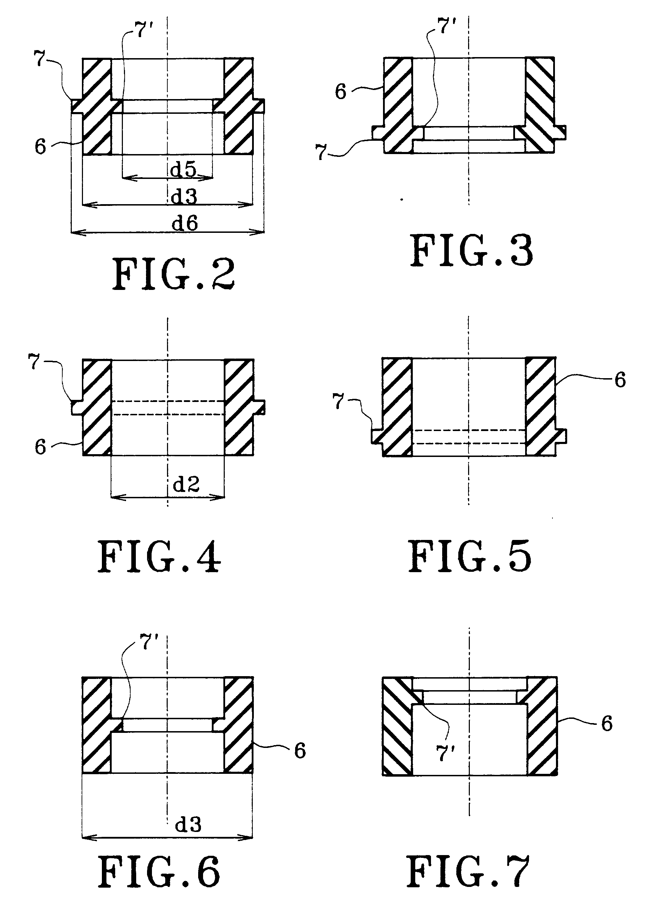

Pour remédier à ces inconvénients, comme on peut le voir sur la figure 2, le joint 6 selon un aspect particulier de la présente invention est muni, sur sa face externe, d'un premier racleur 7 et, sur sa face interne, d'un second racleur 7' destinés à assurer le nettoyage d'au moins une partie de la surface de réception de la surface d'application du joint. Sans que cela ne présente aucun caractère limitatif, le joint illustré est un joint cylindrique, les racleurs ou balais 7 et 7' sont des anneaux de section rectangulaire situés en vis-à-vis sensiblement à la mi-hauteur. Cette réalisation symétrique permet de s'affranchir d'une orientation privilégiée du joint lors de son introduction dans le tube 2.

Nous allons maintenant expliquer l'assemblage des tubes 1 et 2, ainsi que du joint 6. Le joint 6 selon l'invention est réalisé en un matériau élastique, notamment du type élastomère. Lors de l'introduction du joint dans le tube 2, la partie cylindrique de diamètre d3 assure le centrage du joint par rapport au tube 2. L'on fait coulisser le joint 6 coaxialement avec l'axe du tube 2 jusqu'au contact du racleur 7 avec le bord du tube. Le racleur 7 est écrasé et atteint le diamètre interne d4 du tube 2. Son déplacement parallèlement à l'axe du tube 2 assure le balayage de la face interne de ce tube formant la surface de réception de la surface d'application du joint avec un nettoyage des particules solides 4 et des gouttes ou films liquides ou visqueux 5.

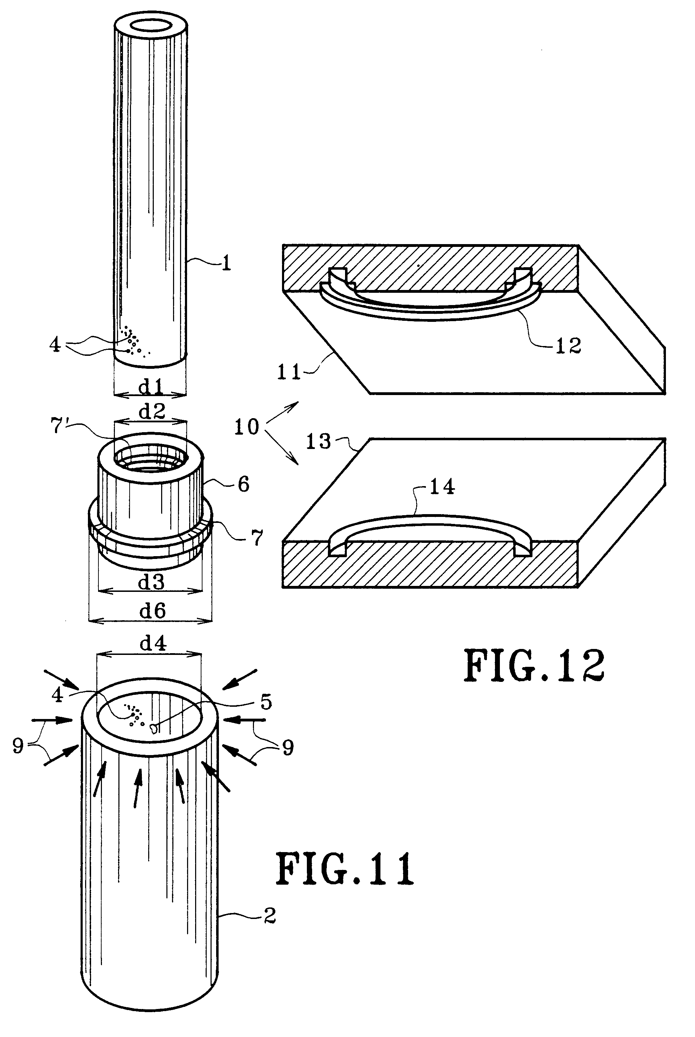

De même, le tube de diamètre d2 du joint 6 selon l'invention assure le guidage et le centrage du tube 1 qui en pénétrant à l'intérieur du joint écrase le racleur interne 7' qui passe d'un diamètre d5 au diamètre d1. Lorsqu'on poursuit la pénétration du tube 1 dans le tube 2 et le joint 6, le racleur interne 7' assure le balayage d'une zone de la surface externe du tube 1 formant la surface de réception de la surface d'application du joint et, par suite, le nettoyage de cette zone des particules et d'éventuels gouttes ou films liquides ou visqueux. L'étanchéité peut éventuellement être encore améliorée en assurant le sertissage du tube 2 sur le tube 1 symbolisé par les flèches 9 sur la figure 11.

La présence du joint 6 selon la présente invention au niveau des zones propres entre les tubes 1 et 2 assure une excellente étanchéité.

La hauteur du racleur 7 égale à (d6 - d3) / 2 doit être suffisante pour permettre un bon raclage du tube 2, sans pour autant provoquer de coincement ou de déchirement du joint 6. Dans un exemple de réalisation mettant en oeuvre un tube 2 ayant un diamètre interne d4 égal à 50 mm, l'on a utilisé avec succès trois joints réalisés en caoutchouc ayant une dureté supérieure à 70 Shore A.

### Exemple 1.

Joint à la limite du coincement :
d3 = 49
d6 = 51

### Exemple 2.

d3 = 48
d6 = 52

### Exemple 3.

(Limite du balayage assuré par le racleur 7)
d3 = 46
d6 = d4 = 50

Il est à noter que dans la condition assemblée, les racleurs 7 et/ou 7' sont écrasés et que le joint 6 selon l'invention présente une configuration sensiblement analogue à la configuration du joint 3 de la figure 1b.

Une disposition asymétrique du racleur 7 illustré sur les figures 3, 5, 7 et 8 permet d'augmenter la surface de réception balayée et nettoyée par le racleur. Toutefois, il est impératif dans un tel cas de diriger le racleur vers la surface à balayer, c'est-à-dire pour le racleur extérieur 7 vers le tube 2.

Sur la figure 8, l'on peut voir un joint 6 selon la présente invention dont les racleurs externe 7 et interne 7' sont axialement opposés, de façon à optimiser simultanément le balayage de la surface interne du tube 2 par le racleur 7 et de la surface externe du tube 1 par le racleur 7'.

Il est à noter que la disposition d'un racleur 7 à une extrémité du joint 6 n'est pas avantageuse dans la mesure où le rebord du joint 6 assure le centrage du joint lors de son introduction dans le tube 2.

L'on peut s'attendre à ce qu'une seule des deux surfaces soit polluée par les particules 4 ou les films ou gouttes 5. Dans un tel cas, il suffit de munir d'un racleur 7 ou 7' uniquement la surface correspondante du joint 6.

La figure 4 représente un joint 6 selon l'invention correspondant au joint 6 de la figure 2, mais dépourvu du racleur interne 7', alors qu'au contraire, la figure 6 représente un joint 6 selon l'invention dépourvu du racleur externe 7. De même, la figure 5 représente un joint 6 selon l'invention, asymétrique, analogue au joint 6 de la figure 3, mais dépourvu du racleur interne 7', alors que la figure 7 représente un tel joint dépourvu du racleur externe 7. Il est à noter que le racleur 7 peut être constitué d'une matière différente de celle mise en oeuvre pour la réalisation du corps du joint. Par exemple, sur la figure 9, l'on peut voir un joint métallique, par exemple en cuivre, muni à sa périphérie d'un anneau en caoutchouc 8, lui-même muni d'un racleur 7. De même, la mise en oeuvre d'un joint 6 comportant une dureté ou une matière différente au niveau du racleur 7 et/ou 7' ne sort pas du cadre de la présente invention.

Le joint 6 peut aussi former un bouchon, par exemple de forme cylindrique tel qu'illustré sur la figure 10.

Le joint 6 selon la présente invention est avantageusement réalisé par moulage. L'on peut mettre, par exemple, en oeuvre des moules en deux parties, ce qui permet de diminuer le coût de revient pour s'approcher du coût de revient des joints tronçonnés 3 de type connu. Avantageusement, le racleur 7 correspond à la jonction de deux pièces formant le moule. Il est à noter que le moulage permet d'obtenir un état de surface amélioré par rapport à des joints extrudés-tronçonnés.

Nous allons maintenant décrire, en référence à la figure 11, un procédé d'assemblage étanche des pièces selon la présente invention. L'on introduit un joint 6 selon la présente invention à l'intérieur du tube 2. Le joint 6 a des dimensions adaptées à celles des pièces à assembler de manière à ce que, d'une part, les racleurs 7 et 7' assurent un nettoyage efficace et, d'autre part, à minimiser le risque de coincement ou de déchirure lors de l'introduction du joint. Dans le cas de mise en oeuvre d'un joint asymétrique, comme par exemple le joint illustré sur la figure 8, il est essentiel de bien respecter l'orientation des racleurs. Le joint 6 est introduit dans le tube 2 jusqu'à la position désirée, cette introduction assurant simultanément le balayage et le nettoyage de la surface interne du tube 5. Le positionnement du joint dans le tube 2 peut être automatique ou manuel. En variante, la surépaisseur formée par le racleur 7 peut servir de moyen de guidage et de positionnement, par exemple le joint 6 s'arrêtant lorsque le racleur 7 a été arrêté par un épaulement ou un rétrécissement du tube 2 (non représenté).

Lorsque le joint 6 est en place dans le tube 2, l'on y introduit le tube 1. De même, le racleur 7' assure le nettoyage de la surface externe du tube 1. L'assemblage peut avantageusement être complété par un sertissage du tube 2 symbolisé par les flèches 9.

Il est bien entendu que le joint 6 selon la présente invention peut tout d'abord être enfilé sur la tige ou le tube 1, le tout pénétrant à son tour à l'intérieur du tube 2. De même, il est possible d'effectuer au préalable un montage ou un positionnement relatif des tubes 1 et 2, le tube 1 pénétrant à l'intérieur du tube 2 suivi par la mise en place du joint, que l'on fait coulisser, avantageusement, le long du tube 1 en direction du tube 2.

Sur la figure 12, l'on peut voir un exemple de réalisation d'un moule 10 selon la présente invention comportant une partie supérieure 11 dans laquelle est ménagée une empreinte 12 et une partie inférieure 13 dans laquelle est ménagée une empreinte 14. Sur la figure 12, seule la moitié d'un moule élémentaire correspondant à un joint selon l'invention a été représentée. De même, un canal d'amenée de matières, notamment de caoutchouc, n'a pas été représenté sur la figure 12. Lors de la fermeture du moule, les empreintes 12 et 14 se trouvent en vis-à-vis. Dans l'exemple illustré, l'empreinte des racleurs 7 et 7' affleure la surface inférieure de la partie supérieure 11. Avantageusement, un moule complet comporte une pluralité de moules élémentaires de la figure 12 pour la production simultanée d'une pluralité de joints selon l'invention.

La mise en oeuvre d'un moule en deux parties est extrêmement simple et permet de fabriquer le joint selon la présente invention avec un prix de revient raisonnable. Les joints selon la présente invention sont vulcanisés, soit dans le moule 10, soit après démoulage, par exemple par apport de chaleur.

L'invention s'applique , à l'assemblage étanche de conduites tubulaires, ainsi qu'au scellement hermétique de conteneurs contenant un matériau pondéreux, notamment une poudre.

## Revendications

1. Procédé pour assembler fixement un joint d'étanchéité (6) en matière élastique et un tube (2), ledit joint présentant des première et seconde extrémités, et un racleur annulaire (7) disposé sur sa face externe à une certaine distance de la première extrémité, ledit procédé étant **caractérisé en ce qu'**il consiste à engager dans le tube (2) de diamètre intérieur d4, le joint (6) de diamètre extérieur d3 sensiblement égal ou inférieur à d4 par sa seconde extrémité pour que ledit racleur (7) de diamètre externe d6 supérieur à d4 assure par écrasement le nettoyage, sur une longueur correspondant sensiblement à la distance séparant le racleur de ladite première extrémité du joint, de la surface interne (5) du tube (2) destinée à être en contact fixe avec le joint (6).

2. Procédé pour assembler fixement un joint d'étanchéité (6) en matière élastique et un tube (1), ledit joint présentant des première et seconde extrémités, et un racleur annulaire (7') disposé sur sa face interne à une certaine distance de la première extrémité, ledit procédé étant **caractérisé en ce qu'**il consiste à engager autour du tube (1) de diamètre externe d1 le joint (6) de diamètre interne d2 sensiblement égal ou supérieur à d1 par sa seconde extrémité pour que ledit racleur (7') de diamètre d5 intérieur inférieur audit diamètre d1 assure par écrasement le nettoyage, sur une longueur correspondant sensiblement à la distance séparant le racleur de la seconde extrémité du joint, de la surface externe du tube (1) destinée à être en contact fixe avec le joint (6).

3. Procédé selon les revendications 1 et 2, **caractérisé en ce qu'**il consiste à assembler fixement un joint d'étanchéité tubulaire (6) entre un premier tube (2) et un second tube (1), ledit joint d'étanchéité (6) présentant alors deux racleurs annulaires (7, 7') situés respectivement sur ses faces externe et interne.

4. Procédé selon la revendication 1 ou 3, **caractérisé en ce qu'**il consiste à compléter l'assemblage par une opération de sertissage pour parfaire l'étanchéité entre le tube (2) et le joint (6).

5. Assemblage fixe d'un joint d'étanchéité (6) en matière élastique et d'un tube (2), ledit joint présentant un racleur annulaire (7) disposé sur sa face externe et se trouvant logé à l'intérieur dudit tube (2), **caractérisé en ce que** le diamètre d3 de la surface externe du joint (6) est sensiblement égal ou inférieur au diamètre interne d4 du tube (2), le racleur (7) présentant avant montage un diamètre externe d6 supérieur audit diamètre d4.

6. Assemblage fixe d'un joint d'étanchéité (6) tubulaire en matière élastique et d'un tube (1), ledit joint présentant un racleur annulaire (7') disposé sur sa face interne et étant monté autour dudit tube, **caractérisé en ce que** le diamètre d2 de la surface interne du joint tubulaire est sensiblement égal ou supérieur au diamètre externe d1. du tube, le racleur annulaire (7') présentant avant montage un diamètre interne d5 inférieur au diamètre d1.

7. Assemblage selon les revendications 5 et 6, **caractérisé en ce qu'**il comporte deux tubes (1, 2), le joint d'étanchéité tubulaire (6) étant alors monté entre ces tubes et présentant à la fois le racleur annulaire (7) disposé sur sa face externe et le racleur annulaire (7') sur sa face interne.

8. Assemblage selon les revendications 5 ou 7, **caractérisé en ce que** le tube (2) est de plus serti sur le joint (6).

9. Assemblage selon l'une quelconque des revendications 5 à 7, **caractérisé en ce que** le joint est réalisé en un matériau ayant une dureté comprise entre 65 et 90 Shore A, de préférence sensiblement égale à 75 Shore A.

10. Assemblage selon l'une quelconque des revendications 5 à 9, **caractérisé en ce que** le joint est fabriqué dans un moule en deux parties.

## Claims

1. A method of securely assembling a seal (6) of resilient material to a tube (2), said seal presenting first and second ends, and an annular scraper (7) disposed on its outside face at a certain distance from the first end, said method being **characterized in that** it consists in engaging, in the tube (2) of inside diameter d4, the seal (6) of outside diameter d3 that is substantially equal to or less than d4, via its second end so that said scraper (7) of outside diameter d6, greater than d4, ensures that the inside surface (5) of the tube (2) intended to be in fixed contact with the seal (6) is cleaned by crushing, over a length corresponding substantially to the distance between the scraper and said first end of the seal.

2. A method of securely assembling a seal (6) of resilient material to a tube (1), said seal presenting first and second ends, and an annular scraper (7') disposed on its inside face at a certain distance from the first end, said method being **characterized in that** it consists in engaging, around the tube (1) of outside diameter d1, the seal (6) of inside diameter d2 that is substantially equal to or greater than d1, via its second end so that said scraper (7') of inside diameter d5, smaller than said d1, ensures that the outside surface (5) of the tube (1) intended to be in fixed contact with the seal (6) is cleaned by crushing, over a length corresponding substantially to the distance between the scraper and the second end of the seal.

3. A method according to claim 1 and claim 2, **characterized in that** it consists in securely assembling a tubular seal (6) between a first tube (2) and a second tube (1), said seal (6) thus presenting two annular scrapers (7, 7') respectively situated on its outside and inside faces.

4. A method according to claim 1 or 3, **characterized in that** it consists in completing assembly with a clamping operation in order to perfect the sealing between the tube (2) and the seal (6).

5. The secure assembly of a seal (6) of resilient material to a tube (2), said seal presenting an annular scraper (7) disposed on its outside face and housed inside said tube (2), said assembly being **characterized in that** the diameter d3 of the outside surface of the seal (6) is substantially equal to or less than the inside diameter d4 of the tube (2), the scraper presenting with assembly an outside diameter d6 that is greater than said diameter d4.

6. The secure assembly of a tubular seal (6) of resilient material to a tube (1), said seal presenting an annular scraper (7') disposed on its inside face and being mounted around said tube, said assembly being **characterized in that** the diameter d2 of the inside surface of the tubular seal is substantially equal to or greater than the outside diameter d1 of the tube, the annular scraper (7') presenting before assembly an inside diameter d5 that is smaller than the diameter d1.

7. An assembly according to claim 5 and claim 6, **characterized in that** it includes two tubes (1, 2), the tubular seal (6) thus being mounted between the tubes and presenting both the annular scraper (7) disposed on the outside face, and the annular scraper (7') disposed on the inside face.

8. An assembly according to claim 5 or 7, **characterized in that** the tube (2) is also clamped on the seal (6).

9. An assembly according to any one of claims 5 to 7, **characterized in that** the seal is made of a material having hardness lying in the range 65 to 90 on the Shore A scale, and preferably substantially equal to 75 on the Shore A scale.

10. An assembly according to any one of claims 5 to 9, **characterized in that** the seal is manufactured in a two-part mold.

## Patentansprüche

1. Verfahren zum starren bzw. festen Zusammenbauen einer Dichtung (6) aus elastischem Material und eines Rohrs bzw. Schlauchs (2), wobei die Dichtung ein erstes und zweites Ende aufweist, sowie einen ringförmigen Abstreifer (7), der auf ihrer Außenseite bzw. äußeren Fläche in einem gewissen Abstand von dem ersten Ende angeordnet ist, wobei das Verfahren **dadurch gekennzeichnet ist, dass** es darin besteht, in dem Rohr bzw. Schlauch (2) des Innendurchmessers d4 die Dichtung (6) des Außendurchmessers d3, der im wesentlichen gleich oder kleiner als d4 ist, mit ihrem zweiten Ende einzusetzen, damit der Abstreifer (7) des Außendurchmessers d6, welcher größer als d4 ist, durch Quetschung die Reinigung der inneren Oberfläche (5) des Rohrs bzw. Schlauchs (2), das dazu bestimmt ist, in festem Kontakt mit der Dichtung (6) zu sein, über eine Länge sicherstellt, welche im wesentlichen dem Abstand entspricht, der den Abstreifer von dem ersten Ende der Dichtung trennt.

2. Verfahren zum starren bzw. festen Zusammenbauen einer Dichtung (6) aus elastischem Material und eines Rohrs bzw. Schlauchs (1), wobei die Dichtung ein erstes und zweites Ende aufweist, sowie einen ringförmigen Abstreifer (7'), der auf ihrer Innenseite bzw. inneren Fläche in einem gewissen Abstand von dem ersten Ende angeordnet ist, wobei das Verfahren **dadurch gekennzeichnet ist, dass** es darin besteht, in das Rohr bzw. den Schlauch (1) des Außendurchmessers d1 die Dichtung (6) des Innendurchmessers d2, der im wesentlichen gleich oder größer als d1 ist, mit ihrem zweiten Ende einzusetzen, damit der Abstreifer (7') des Innendurchmessers d5, welcher kleiner als der Durchmesser d1 ist, durch Quetschung die Reinigung der äußeren Oberfläche des Rohrs bzw. Schlauchs (1), die dazu bestimmt ist, in festem Kontakt mit der Dichtung (6) zu sein, über eine Länge sicherstellt, die im wesentlichen dem Abstand entspricht, welcher den Abstreifer von dem zweiten Ende der Dichtung trennt.

3. Verfahren gemäß den Ansprüchen 1 und 2, **dadurch gekennzeichnet, dass** es darin besteht, eine rohr-bzw. schlauchförmige Dichtung (6) fest zwischen ein erstes Rohr bzw. einen ersten Schlauch (2) und ein zweites Rohr bzw. einen zweiten Schlauch (1) einzubauen, wobei die Dichtung (6) zwei ringförmige Abstreifer (7, 7') aufweist, die sich auf ihrer äußeren bzw. inneren Fläche befinden.

4. Verfahren gemäß Anspruch 1 oder 3, **dadurch gekennzeichnet, dass** es darin besteht, den Zusammenbau durch einen Vorgang des Falzens bzw. Einfassens bzw. der Quetschverbindung zum Vollenden der Dichtheit zwischen dem Rohr bzw. Schlauch (2) und der Dichtung (6) zu vollenden.

5. Starrer bzw. fester Zusammenbau einer Dichtung (6) aus elastischem Material und eines Rohrs bzw. Schlauchs (2), wobei die Dichtung einen ringförmigen Abstreifer (7) aufweist, der auf ihrer Außenseite bzw. äußeren Fläche angeordnet ist und in dem Inneren des Rohrs bzw. Schlauchs aufgenommen ist, **dadurch gekennzeichnet,dass** der Durchmesser d3 der äußeren Oberfläche der Dichtung (6) im wesentlichen gleich oder kleiner als der innere Durchmesser d4 des Rohrs bzw. Schlauchs (2) ist, wobei der Abstreifer (7) vor der Montage einen äußeren Durchmesser d6 aufweist, der größer als der Durchmesser d4 ist.

6. Starrer bzw. fester Zusammenbau einer rohr- bzw. schlauchförmigen Dichtung (6) aus elastischem Material und eines Rohrs bzw. Schlauchs (1), wobei die Dichtung einen ringförmigen Abstreifer (7') aufweist, der auf ihrer Innenseite bzw. inneren Fläche angeordnet ist und um das Rohr bzw. den Schlauch angebracht ist, **dadurch gekennzeichnet, dass** der Durchmesser d2 der inneren Oberfläche der rohr- bzw. schlauchförmigen Dichtung im wesentlichen gleich dem oder größer als der äußere Durchmesser d1 des Rohrs bzw. Schlauchs ist, wobei der ringförmige Abstreifer (7') vor der Montage einen inneren Durchmesser d5 aufweist, der kleiner als der Durchmesser d1 ist.

7. Zusammenbau gemäß den Ansprüchen 5 und 6, **dadurch gekennzeichnet, dass** er zwei Rohre bzw. Schläuche (1, 2) hat, wobei die rohr-bzw. schlauchförmige Dichtung (6) dann zwischen diesen Rohren bzw. Schläuchen angebracht ist und gleichzeitig den ringförmigen Abstreifer (7), der auf ihrer Außenseite bzw. äußeren Fläche angeordnet ist, und den ringförmigen Abstreifer (7') auf ihrer Innenseite bzw. inneren Fläche aufweist.

8. Zusammenbau gemäß den Ansprüchen 5 oder 7, **dadurch gekennzeichnet, dass** das Rohr bzw. der Schlauch (2) außerdem über die Dichtung (6) gefalzt bzw. gefasst bzw. eingesetzt bzw. gequetscht ist.

9. Zusammenbau gemäß irgendeinem der Ansprüche 5 bis 7, **dadurch gekennzeichnet, dass** die Dichtung aus einem Material hergestellt ist, das eine Härte hat, die zwischen 65 und 90 Shore A beträgt, vorzugsweise im wesentlichen gleich 75 Shore A ist.

10. Zusammenbau gemäß irgendeinem der Ansprüche 5 bis 9, **dadurch gekennzeichnet, dass** die Dichtung in einer Form aus zwei Teilen hergestellt ist.
